# EUROPÄISCHE PATENTANMELDUNG

(11) **EP 3 564 922 A1**
(43) Veröffentlichungstag der Anmeldung: **06.11.2019**
(21) Anmeldenummer: 19165725.3
(22) Anmeldetag: 28.03.2019
(51) Int. Cl.: G08G 1/07, G08G 1/095, G06F 21/64, H04L 9/32, G08G 1/097

(54) **SYSTEM UND BLOCKCHAIN-BASIERTES VERFAHREN ZUM SICHERSTELLEN EINES ORDNUNGSGEMÄSSEN BETRIEBS VON LICHTSIGNALANLAGEN**

(30) Priorität: 20.04.2018 DE 102018206133
(71) Anmelder: Siemens Mobility GmbH, 81739 München (DE)
(72) Erfinder: Birkner, Leonhard, 80796 München (DE)

(57) **Zusammenfassung**

Offenbart ist ein blockchain-basiertes Verfahren zum Prüfen eines ordnungsgemäßen Betriebs von Lichtsignalanlagen, wobei ein Block einer Blockchain unter Verwendung eines Hashwertes mindestens eines vorherigen Blocks durch eine Steuereinheit erstellt wird, ein Schaltplan von mindestens einer Lichtsignalanlage innerhalb des Blocks aufgerufen wird, Signalzeiten der mindestens einen Lichtsignalanlage im Rahmen des Blocks ermittelt und mit den im Schaltplan hinterlegten Signalzeiten verglichen werden und abhängig vom durchgeführten Vergleich ein Status der mindestens einen Lichtsignalanlage ermittelt wird.

## Beschreibung

Die Erfindung betrifft ein blockchain-basiertes Verfahren zum Prüfen eines ordnungsgemäßen Betriebs von Lichtsignalanlagen sowie ein System mit mindestens einer Lichtsignalanlage, aufweisend eine Steuereinheit zum Ausführen von Schaltplänen und zum Ansteuern von Signalmitteln der Lichtsignalanlage und zum Messen von phasenabhängigen Signalzeiten.

Lichtsignalanlagen werden üblicherweise durch Schaltpläne gesteuert. Ein Schaltplan kann dabei ein regelbasiertes Programm sein, welches in seiner Komplexität und den Aktionsmöglichkeiten variieren kann. Ein Schaltplan kann in einer Steuereinheit einer Lichtsignalanlage oder in einer Überwachungszentrale hinterlegt sein und das Einwirken der Lichtsignalanlage auf einen Verkehrsstrom kontrollieren.

Die Schaltpläne stellen Signalzeiten bereit, welche von den Steuereinheiten der Lichtsignalanlagen durch Aktivieren und Deaktivieren entsprechender Signalmittel eingehalten werden müssen. Um, beispielsweise an Kreuzungen, mehrere Verkehrsströme fehlerfrei zu regeln, müssen die in den Schaltplänen hinterlegten Signalzeiten von den Lichtsignalanlagen genau befolgt werden. Hierfür ist eine regelmäßige Überwachung des Betriebs der Lichtsignalanlagen notwendig.

Die Absicherung von signalsicheren Zuständen an Kreuzungen erfolgt oftmals ebenfalls über eine Steuereinheit oder über eine Überwachungszentrale. Dort ist eine Signalsicherung bereitgestellt. Dabei können die Zustände aller Lichtsignalanlagen erfasst, überprüft, Konflikte in den Zuständen erkannt und Abschaltungen in signalsichere Zustände oder Abschaltungen von Lichtsignalanlagen durchgeführt werden. Die Übertragung der jeweiligen Schaltzustände der Lichtsignalanlagen von den Signalgebern bzw. der Steuereinheiten zum Durchführen eines Abgleichs mit der Signalsicherung erfolgt üblicherweise mit Hilfe von drahtgebundenen oder drahtlosen Kommunikationsverbindungen. Der Abgleich zum Durchführen einer Überprüfung, ob die Schaltzustände ordnungsgemäß von der jeweiligen Lichtsignalanlage ausgeführt werden, kann beispielsweise regelbasiert erfolgen.

Aufgabe der Erfindung ist es ein System und ein Verfahren zum manipulationssicheren Überprüfen von Betriebszuständen von Lichtsignalanlagen vorzuschlagen.

Gelöst wird die Aufgabe durch den Gegenstand der unabhängigen Patentansprüche 1 und 11. Vorteilhafte Ausgestaltungen der Erfindung sind Gegenstand von jeweils abhängigen Unteransprüchen.

Nach einem Aspekt der Erfindung wird ein blockchain-basiertes Verfahren zum Prüfen eines ordnungsgemäßen Betriebs von Lichtsignalanlagen bereitgestellt.

In einem Schritt wird ein Block einer Blockchain unter Verwendung eines Hashwertes mindestens eines vorherigen Blocks durch eine Steuereinheit erstellt.

Anschließend wird ein Schaltplan von mindestens einer Lichtsignalanlage innerhalb des Blocks aufgerufen.

In einem weiteren Schritt werden Signalzeiten der mindestens einen Lichtsignalanlage im Rahmen des Blocks ermittelt und mit den im Schaltplan hinterlegten Signalzeiten verglichen.

Abhängig vom durchgeführten Vergleich wird ein Status der mindestens einen Lichtsignalanlage ermittelt.

Zum Ermitteln der tatsächlichen Signalzeiten der mindestens einen Lichtsignalanlage können interne oder externe Sensoren verwendet werden. Beispielsweise können die Signalzeiten durch eine interne Messuhr nachgeprüft werden. Alternativ oder zusätzlich können die phasenabhängigen Signalzeiten anhand von Verkehrsbewegungen geprüft werden. So kann während mehrerer Rotphasen die Zeit ermittelt werden, während welcher die Fahrzeuge stehen oder die Dauer der Bewegung der Fahrzeuge während der Grünphasen von Lichtsignalanlagen.

Die gesammelten Messdaten der Sensoren können von einer Steuereinheit der Lichtsignalanlage ausgelesen und direkt verarbeitet oder in einem Speicher zwischengespeichert werden. Die Durchführung der Messung kann dabei kontinuierlich, bei Bedarf oder in definierten zeitlichen Abständen erfolgen. Vorzugsweise können die ermittelten Messdaten bzw. Signalzeiten im Block der Blockchain hinterlegt sein.

Durch den Vergleich der gemessenen Signalzeiten mit den vorgesehenen bzw. geplanten Signalzeiten der Schaltpläne kann die ordnungsgemäße Funktionsfähigkeit der mindestens einen Lichtsignalanlage geprüft werden.

Bevorzugterweise kann der Status der Überprüfung im Block der Blockchain gespeichert werden.

Mit Hilfe der Blockchain-Technologie können üblicherweise zentral abgewickelte Prozesse sicher und nachvollziehbar dezentralisiert werden. Die dezentral ermittelten Messwerte der Sensoren können dabei dezentral von den Steuereinheiten ausgewertet werden. Gemäß dem erfindungsgemäßen Verfahren kann die Absicherung von signalsicheren Zuständen in einer Blockchain erfolgen. Jeder Signalgeber bzw. jede Lichtsignalanlage kennt dabei ihren eigenen Zustand und kann somit ad hoc die Fehlerfreiheit seiner Signalisierung überprüfen. In einem Block der Blockchain kann die Information über alle zum jeweiligen Zeitpunkt erlaubten Zustände vorliegen oder abgelegt werden.

Auf physikalischer Ebene kann die Kommunikation entweder direkt zwischen allen Signalgebern bzw. Lichtsignalanlagen laufen oder über einen zentralen Knoten geleitet werden.

Das erfindungsgemäße Verfahren kann bevorzugterweise im Rahmen einer Generierung eines neuen Blocks einer Blockchain ausgestaltet sein. Dabei kann unter Zuhilfenahme eines Konsensverfahrens, wie beispielsweise Proof-of-Stake, Proof-of-Work, Proof-of-Activity und dergleichen, die Blockchain durch neue Blöcke erweitert werden, welche aufeinander aufbauen.

Jeder Überprüfungsvorgang der Signalzeiten kann dabei als ein separater Block der Blockchain ausgestaltet sein. Das Verfahren kann durch Steuereinheiten von einer oder mehrere Lichtsignalanlagen ausgeführt werden.

Aufgrund der aufeinander aufbauenden Bereitstellung der Blöcke der Blockchain, kann eine nachträgliche Änderung der Blöcke und damit eine Manipulation unterbunden werden.

Durch das Verfahren wird weniger Hardware in Überwachungszentralen benötigt. Dadurch können die Kosten für das Betreiben der Lichtsignalanlagen reduziert werden. Des Weiteren kann eine zentrale oder dezentrale Überprüfung der korrekten Funktionstüchtigkeit der unterschiedlichen Lichtsignalanlagen eines Verkehrsnetzes realisiert werden.

Gemäß einem Ausführungsbeispiel des Verfahrens sind die im Schaltplan hinterlegten Signalzeiten der mindestens einen Lichtsignalanlage phasenabhängig hinterlegt und weisen einen Toleranzrahmen auf. Durch das Vorliegen eines Toleranzrahmens können geringfügige Abweichungen oder Messunsicherheiten der Signalzeiten vernachlässigt werden. Die Signalzeiten können vorzugsweise abhängig von der Phase und abhängig von den jeweiligen Phasenwechseln sein. Hierdurch kann eine präzise Überprüfung der Funktionsfähigkeit der Lichtsignalanlage gewährleistet werden.

Nach einem weiteren Ausführungsbeispiel des Verfahrens ist der Schaltplan der mindestens einen Lichtsignalanlage als eine Tabelle im Block der Blockchain hinterlegt. Durch den Einsatz von Vergleichstabellen kann eine technisch einfache Überprüfbarkeit der jeweiligen Phasen und Phasenwechsel der Lichtsignalanlagen durchgeführt werden. Mögliche Phasen können beispielsweise Rotphase, Gelbphase, Grünphase, Links- bzw. Rechtsabbiegephase, sicherer Zustand, Phasen für öffentlichen Personennahverkehr und dergleichen sein.

Gemäß einem weiteren Ausführungsbeispiel des Verfahrens wird der mindestens eine Block der Blockchain zum Prüfen des Betriebs dezentral von einer Steuereinheit mindestens einer Lichtsignalanlage oder zentral durch eine Steuereinheit einer Überwachungszentrale generiert. Hierdurch kann eine Überprüfung des ordnungsgemäßen Betriebs von einer oder mehrerer Lichtsignalanlagen zentral oder dezentral initiiert werden. Eine Überprüfung kann somit selbstständig, automatisiert oder ferngesteuert eingeleitet werden.

Nach einem weiteren Ausführungsbeispiel des Verfahrens werden die Signalzeiten der mindestens einen Lichtsignalanlage während einer Zeitdauer ermittelt und auf eine im Schaltplan hinterlegte Einheit normiert. Hierdurch kann während einer Umlaufzeit bzw. während einer definierten Zeitspanne laufende Messungen durchgeführt und anschließend ein Mittelwert oder eine Normierung vorgenommen werden. Es kann somit eine präzisere Messung der Signalzeiten erfolgen.

Gemäß einem weiteren Ausführungsbeispiel des Verfahrens wird eine Warnung oder Fehlermeldung im Block der Blockchain hinterlegt und/oder über eine Kommunikationsverbindung versendet, wenn mindestens eine ermittelte Signalzeit nicht mit einer im Schaltplan hinterlegten Signalzeit übereinstimmt. Die Warnung oder Fehlermeldung kann in der Blockchain als ein Protokoll über bestehende Fehler oder Unstimmigkeiten verbleiben und ist somit manipulationsgesichert nachverfolgbar. Hierdurch können eventuelle fehlerhaft betriebene Lichtsignalanlagen zuverlässig ermittelt werden. Entsprechende Lichtsignalanlagen können anschließend markiert und für eine manuelle Reparatur oder Wartung vermerkt werden.

Alternativ oder zusätzlich kann eine automatische Anpassung der Signalzeiten in der Steuereinheit, eine Deaktivierung der fehlerhaften Lichtsignalanlage oder eine Überführung der Lichtsignalanlage in einen sicheren Zustand durchgeführt werden. Ein sicherer Zustand kann beispielsweise in Form einer blinkenden Gelbphase ausgestaltet sein.

Nach einem weiteren Ausführungsbeispiel des Verfahrens wird ein ordnungsgemäßer Zustand im Block der Blockchain hinterlegt und/oder über die Kommunikationsverbindung versendet, wenn alle ermittelten Signalzeiten mit den im Schaltplan hinterlegten Signalzeiten übereinstimmen. Stimmen alle ermittelten Signalzeiten im Rahmen der Toleranzen mit den Schaltplänen überein, so kann eine ordnungsgemäße Funktionstüchtigkeit belegt werden. Dieser Zustand kann im Block gespeichert und der entsprechende Block abgeschlossen werden.

Die Blockchain mit den jeweils abgeschlossenen bzw. generierten Blöcken kann allen Teilnehmern des Verfahrens, wie beispielsweise Steuereinheiten von Lichtsignalanlagen oder Steuereinheiten von Überwachungszentralen bereitgestellt werden. Hierfür weisen die Steuereinheiten vorzugsweise Kommunikationseinheiten zum Ermöglichen einer Kommunikationsverbindung auf.

Gemäß einem weiteren Ausführungsbeispiel des Verfahrens wird eine Kommunikationsverbindung zwischen einer Steuereinheit der mindestens einen Lichtsignalanlage und einer Steuereinheit einer Überwachungszentrale und/oder einer Steuereinheit mindestens einer weiteren Lichtsignalanlage zum Betreiben und zum Abrufen der Blockchain hergestellt. Hierdurch kann eine konstante Verfügbarkeit der Blockchain gewährleistet werden.

Nach einem weiteren Ausführungsbeispiel des Verfahrens wird anhand dem zuletzt verwendeten Hashwert und dem ermittelten Zustand ein neuer Hashwert berechnet. Durch das Verwenden von Hashwerten kann eine kryptografische Verbindung zwischen den Blöcken generiert werden. Da der generierte Hashwert auf dem ermittelten Status basiert, kann eine Fälschung des Hashwerts verhindert oder zumindest erschwert werden. Der Hashwert kann auch auf den ermittelten Messwerten und den im Block abgelegten Schaltplänen basieren.

Gemäß einem weiteren Ausführungsbeispiel des Verfahrens wird ein neuer Block der Blockchain zum Prüfen eines ordnungsgemäßen Betriebs der mindestens einen Lichtsignalanlage in definierten zeitlichen Abständen oder durch ein Ereignis ausgelöst generiert. Hierdurch kann beispielsweise ein sogenannter Trigger definiert werden, ab wann eine Überprüfung durchgeführt wird.

Bei einer einfachen Ausgestaltung kann eine Überprüfung der Schaltpläne der Lichtsignalanlagen in vordefinierten zeitlichen Abständen automatisch erfolgen.

Gemäß einem weiteren Aspekt der Erfindung wird ein System zum Durchführen des erfindungsgemäßen Verfahrens mit mindestens einer Lichtsignalanlage bereitgestellt. Das System weist mindestens eine Lichtsignalanlage mit einer Steuereinheit zum Ausführen von Schaltplänen und zum Ansteuern von Signalmitteln der Lichtsignalanlage und zum Messen von phasenabhängigen Signalzeiten auf.

Des Weiteren kann das System auch externe Überwachungszentralen mit Steuereinheiten aufweisen, welche über Kommunikationsverbindungen mit der mindestens einen Lichtsignalanlage verbunden sind.

Durch die Steuereinheiten kann vorzugsweise eine dezentrale Durchführung der Überprüfung der ordnungsgemäßen Funktionsfähigkeit der Lichtsignalanlagen erfolgen. Hieraus kann sich eine Einsparung der Hardware ergeben. Die Absicherung wird vorzugsweise über Einsatz von Blockchain Technologie erreicht. In der Blockchain kann sowohl eine Authentifizierung der Teilnehmer, als auch die gegenseitige Überwachung der jeweiligen Zustände und der Abgleich mit allen erlaubten Zuständen der Lichtsignalanlagen mit den entsprechenden Signalzeiten stattfinden.

Es kann somit ein System bereitgestellt werden, welches dezentral und flexibel eine Überprüfung der eingesetzten Lichtsignalanlagen durchführen kann. Durch die Blockchain-Technologie kann eine gesonderte Überwachung der Lichtsignalanlagen entfallen, da die Blöcke transparent und manipulationssicher erstellbar sind.

Die oben beschriebenen Eigenschaften, Merkmale und Vorteile dieser Erfindung sowie die Art und Weise, wie diese erreicht werden, werden klarer und deutlicher verständlich durch die Erläuterung der folgenden stark vereinfachten schematischen Darstellungen bevorzugter Ausführungsbeispiele. Hierbei zeigen
- FIG 1: eine schematische Darstellung eines Systems gemäß einer Ausführungsform der Erfindung und
- FIG 2: eine Veranschaulichung eines Verfahrens gemäß einer Ausführungsform der Erfindung.

In den Figuren weisen dieselben konstruktiven Elemente jeweils dieselben Bezugsziffern auf.

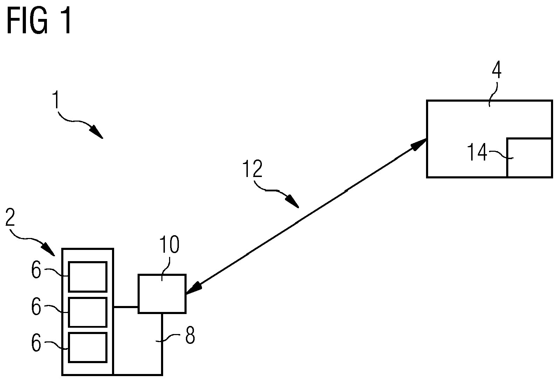

Die FIG 1 zeigt eine schematische Darstellung eines Systems 1 mit einer Lichtsignalanlagen 2 und einer zentralen Überwachungseinheit 4.

Die Lichtsignalanlage 2 weist drei Signalgeber 6 auf, welche eine Grünphase, eine Gelbphase und eine Grünphase signalisieren können. Die Signalgeber 6 sind mit einer Steuereinheit 8 verbunden.

Die Steuereinheit 8 führt dabei vorgegebene Schaltpläne aus und kann gleichzeitig die tatsächlichen Schaltzeiten der Signalgeber 6 zum Überprüfen messen. Hierfür kann die Steuereinheit 8 einen Speicher zum Ablegen der Messwerte aufweisen. Die Steuer- einheit 8 kann als ein Rechner, ein Steuergerät und dergleichen ausgestaltet sein.

Des Weiteren ist die Steuereinheit 8 mit einer Kommunikationsvorrichtung 10 zum Herstellen von drahtlosen Kommunikationsverbindungen 12 ausgestattet. Beispielsweise kann die Steuereinheit 8 über die Kommunikationsverbindung 12 mit der Überwachungszentrale 4 verbunden sein.

Die Überwachungszentrale 4 kann vorzugsweise eine eigene zentrale Steuereinheit 14 aufweisen.

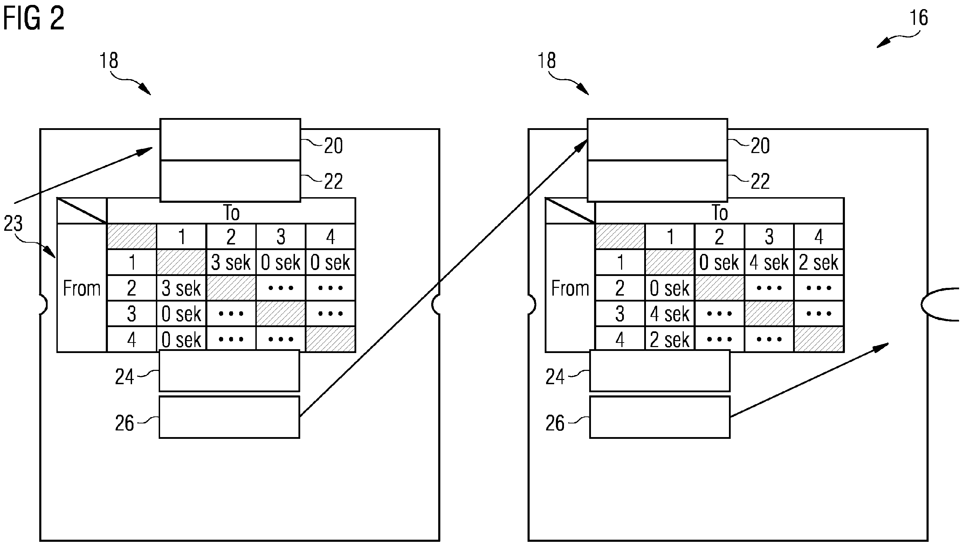

In der FIG 2 ist ein schematisches Ablaufdiagramm eines blockchain-basierten Verfahrens 16 zum Überprüfen eines ordnungsgemäßen Betriebs von mindestens einer Lichtsignalanlage 2 gemäß einer Ausführungsform der Erfindung veranschaulicht.

In einem Schritt wird ein Block 18 einer Blockchain erstellt. Dabei wird ein Konsensverfahren 20 angewandt, bei welchem ein Hashwert des vorherigen nicht dargestellten Blocks geprüft wird.

Anschließend wird ein Schaltplan von mindestens einer Lichtsignalanlage 2 innerhalb des Blocks 18 aufgerufen oder in dem Block gespeichert 22.

Der Schaltplan mit hinterlegten Signalzeiten der mindestens einen Lichtsignalanlage 2 ist hierbei als eine Tabelle 23 ausgestaltet, welche phasenabhängig aufgebaut ist und Toleranzrahmen aufweist.

In einem weiteren Schritt 24 werden Signalzeiten der mindestens einen Lichtsignalanlage 2 im Rahmen des Blocks 18 ermittelt und mit den im Schaltplan hinterlegten Signalzeiten verglichen. Dieser Schritt erfolgt während einer definierten Zeitspanne. Alternativ können auch mehrere Messungen der Signalzeiten nacheinander erfolgen.

Abhängig vom durchgeführten Vergleich wird ein Status der mindestens einen Lichtsignalanlage 2 ermittelt und im Block 18 hinterlegt 26.

Der Block 18 kann anschließend mit einem neuen Hashwert abgeschlossen werden, welcher auf dem ermittelten Status basierend erstellt werden kann 28.

Der Block 18 wird anschließend an alle Steuereinheiten 8, 14 übermittelt, wodurch eine Redundanz der Blockchain erzielt werden kann.

Ein weiterer Block 19 kann anschließend ähnlich erstellt werden. Dabei wird der zuvor erstellte Hashwert 26 zum Durchführen des Konsensverfahrens 20 herangezogen.

Hierdurch kann eine automatisierte Überprüfung der Funktion von Lichtsignalanlagen 2 realisiert werden. Die Ergebnisse der Überprüfung werden in den Blocks 18, 19 gespeichert, wodurch die Blockchain als ein manipulationsgesichertes Protokoll und Überprüfungswerkzeug eingesetzt werden kann.

## Patentansprüche

1. Blockchain-basiertes Verfahren (16) zum Prüfen eines ordnungsgemäßen Betriebs von Lichtsignalanlagen (2), wobei
- ein Block (18, 19) einer Blockchain unter Verwendung eines Hashwertes mindestens eines vorherigen Blocks durch eine Steuereinheit (8, 14) erstellt wird (20),
- ein Schaltplan (23) von mindestens einer Lichtsignalanlage (2) innerhalb des Blocks (18, 19) aufgerufen wird (22),
- Signalzeiten der mindestens einen Lichtsignalanlage (2) im Rahmen des Blocks (18, 19) ermittelt und mit den im Schaltplan (23) hinterlegten Signalzeiten verglichen werden (24) und
- abhängig vom durchgeführten Vergleich ein Status der mindestens einen Lichtsignalanlage (2) ermittelt wird (26).

2. Verfahren nach Anspruch 1, wobei die im Schaltplan (23) hinterlegten Signalzeiten der mindestens einen Lichtsignalanlage (2) phasenabhängig hinterlegt sind und einen Toleranzrahmen aufweisen.

3. Verfahren nach Anspruch 1 oder 2, wobei der Schaltplan (23) der mindestens einen Lichtsignalanlage (2) als eine Tabelle im Block (18, 19) der Blockchain hinterlegt ist.

4. Verfahren nach einem der Ansprüche 1 bis 3, wobei der mindestens eine Block (18, 19) der Blockchain zum Prüfen des Betriebs dezentral von einer Steuereinheit (8) mindestens einer Lichtsignalanlage (8) oder zentral durch eine Steuereinheit (14) einer Überwachungszentrale (4) generiert wird.

5. Verfahren nach einem der Ansprüche 1 bis 4, wobei die Signalzeiten der mindestens einen Lichtsignalanlage (2) während einer Zeitdauer ermittelt und auf eine im Schaltplan (23) hinterlegte Einheit normiert werden.

6. Verfahren nach einem der Ansprüche 1 bis 5, wobei eine Warnung oder Fehlermeldung im Block (18, 19) der Blockchain hinterlegt und/oder über eine Kommunikationsverbindung (12) versendet wird (26), wenn mindestens eine ermittelte Signalzeit nicht mit einer im Schaltplan (23) hinterlegten Signalzeit übereinstimmt.

7. Verfahren nach einem der Ansprüche 1 bis 5, wobei ein ordnungsgemäßer Zustand im Block (18, 19) der Blockchain hinterlegt und/oder über die Kommunikationsverbindung (12) versendet wird (26), wenn alle ermittelten Signalzeiten mit den im Schaltplan (23) hinterlegten Signalzeiten übereinstimmen.

8. Verfahren nach einem der Ansprüche 1 bis 7, wobei eine Kommunikationsverbindung (12) zwischen einer Steuereinheit (8) der mindestens einen Lichtsignalanlage (2) und einer Steuereinheit (14) einer Überwachungszentrale (4) und/oder einer Steuereinheit (8) mindestens einer weiteren Lichtsignalanlage (2) zum Betreiben und zum Abrufen der Blockchain hergestellt wird.

9. Verfahren nach einem der Ansprüche 1 bis 8, wobei anhand dem zuletzt verwendeten Hashwert und dem ermittelten Status ein neuer Hashwert berechnet wird (28).

10. Verfahren nach einem der Ansprüche 1 bis 9, wobei ein neuer Block (19) der Blockchain zum Prüfen eines ordnungsgemäßen Betriebs der mindestens einen Lichtsignalanlage (2) in definierten zeitlichen Abständen oder durch ein Ereignis ausgelöst generiert wird (20).

11. System (1) zum Durchführen eines Verfahrens (16) nach einem der vorhergehenden Ansprüche mit mindestens einer Lichtsignalanlage (2), aufweisend eine Steuereinheit (8) zum Ausführen von Schaltplänen (23) und zum Ansteuern von Signalgebern (6) der Lichtsignalanlage (2) und zum Messen von phasenabhängigen Signalzeiten.
